# EUROPEAN PATENT APPLICATION

(11) **EP 4 818 296 A1**
(43) Date of publication of application: **07.10.2026**
(21) Application number: 26176353.6
(22) Date of filing: 14.03.2022
(51) Int. Cl.: C10M 107/34

(54) **BASE OIL COMPOSITION, FORMULATION AND USE**

(30) Priority: 15.03.2021 GB 202103523
(62) Document number(s) of the earlier application(s) in accordance with Art. 76 EPC: 22714786.5 / 4 308 668
(71) Applicant: Cargill Bioindustrial UK Limited, London EC4R 9AT (GB)
(72) Inventor: MOODY, Gareth, Snaith, Goole, Yorkshire, DN 14 9AA (GB); WARREN, Bethan Lora May, Snaith, Goole, Yorkshire, DN14 9AA (GB); CALE, Ben, Snaith, Goole, Yorkshire, DN14 9AA (GB)
(74) Representative: Isarpatent

(57) **Abstract**

The present invention relates to a base oil. The base oil as described herein provides utility inter alia in gear oil formulations, and in particular transmission fluids, and provides improved coefficient of friction properties when in use. More especially in some embodiments there is provided a gear oil formulation which is particularly suitable for use in electrical vehicles with or without integrated gear boxes.

## Description

The present invention relates to a base oil. The base oil as described herein provides utility inter alia in gear oil formulations, and in particular transmission fluids, and provides improved coefficient of friction properties when in use. More especially some embodiments provide gear oil formulations which are particularly suitable for use in electrical vehicles with or without integrated gear boxes.

Electric vehicles are vehicles which are propelled using one or more electric motors. Electric vehicles may be fully electric (also known as pure-electric or all-electric vehicles) or hybrid in nature (in a hybrid electric vehicle propulsion may be achieved from an alternative means, such as hydrocarbon derived fuel some of the time). Electric vehicles also include range-extended electric vehicles where the vehicle is powered by an electric motor and a plug-in battery, but the vehicle also comprises an auxiliary combustion engine which is used only to supplement battery charging and not as a primary source of propulsion. The present invention is suitable for use in all of these types of electric vehicle.

Gear oil formulations are a sub-class of lubricant oil, and typically comprise a lubricant base stock (or base oil) as their majority component. The choice of lubricant base stock utilised in a lubricant oil can have a major impact on properties such as oxidation and thermal stability, volatility, low temperature fluidity, solvency of additives, contaminants and degradation products, and traction. The American Petroleum Institute (API) currently defines five groups of lubricant base stocks (API Publication 1509).

Groups I, II and III are mineral oils which are classified by the amount of saturates and sulphur they contain and by their viscosity indices. Table 1 below illustrates these API classifications for Groups I, II and III.

**Table 1**

| Group | Saturates | Sulphur | Viscosity Index (VI) |
|---|---|---|---|
| I | <90% | >0.03% | 80-120 |
| II | At least 90% | Not more than 0.03% | 80-120 |
| III | At least 90% | Not more than 0.03% | At least 120 |

Group I base stocks are solvent refined mineral oils, which are the least expensive base stock to produce, and currently account for most base stock sales. They provide satisfactory oxidation stability, volatility, low temperature performance and traction properties and have particularly good solvency for additives and contaminants. Group II base stocks are mostly hydroprocessed mineral oils, which typically provide improved volatility and oxidation stability as compared to Group I base stocks. The use of Group II stocks has grown to about 30% of the US market. Group III base stocks are severely hydroprocessed mineral oils or they can be produced via wax or paraffin isomerisation. They are known to have better oxidation stability and volatility than Group I and II base stocks but have a limited range of commercially available viscosities.

Group IV base stocks differ from Groups I to III in that they are synthetic base stocks e.g., polyalphaolefins (PAOs). PAOs have good oxidative stability, volatility, and low pour points. Disadvantages include moderate solubility of polar additives, for example anti-wear additives.

Group V base stocks are all base stocks that are not included in Groups I to IV. Examples include alkyl naphthalenes, alkyl aromatics, vegetable oils, esters (including polyol esters, diesters and monoesters), polycarbonates, silicone oils and polyalkylene glycols.

Gear oil formulations suitable for use in the automotive field desirably provide a long-life oil with a relatively high viscosity (versus other lubricant application areas) for the lubrication of rear axles and some transmission systems in a vehicles power train. Additionally, final drives and driven accessories in agricultural and construction equipment may also require gear oils. More generally, gear oil formulations also desirably provide good oxidation stability and rust or anticorrosion properties. Typically, additives are provided to a lubricating base oil to provide a desirable gear oil formulation for its intended use; base oils which provide desirable properties in and of themselves are still sought to limit the formulators need to incorporate costly additives, and to provide simpler formulations which are more easily and quickly manufactured.

The rapid move towards electrification of passenger vehicles has surpassed the understanding and specifications of current gear oil specifications of OEM's and regulators. Current generation hybrid and electric vehicles still use standard automatic transmission fluid (ATF) formulations which were not specifically designed for this application. Current gear oils are not fulfilling the dynamic requirements of OEM's, due to rapid advancements in electric vehicle technology, ATF base fluids, and ad-packs.

Furthermore, thermal management of parts in electric vehicles is gaining importance. In the battery of the vehicle thermal management is crucial to ensure safe running and use. There is currently a great amount of research being conducted looking into immersion cooled battery systems, which place the battery into direct contact with dielectric cooling fluids. Fluids with high thermal properties, for example heat capacity and thermal conductivity, are therefore required for this application. Cooling of electronic power systems, for example the electric motor and the transmission, are also required in order to keep them functioning effectively, without overheating. Removing excess heat from electronic systems also helps to reduce electrical resistance and therefore helps to improve efficiency. As such, the thermal properties of a base fluid suitable for use in an electric vehicle will differ greatly to those developed for use in automotive combustion engines.

As such, despite continuous development of lubricant technology for transmission and gearboxes in internal combustion, hybrid and electrical vehicles, there remains a need for lubricant oil formulations with improved energy efficiency over the lifetime of the lubricant oil. More especially there is a need for lubricant technology optimised and tailored to meet the requirements of electric vehicle gearboxes, which differ in their requirements to those of traditional combustion engines. As such, new base oils which offer high performance in electric engines (in particular low traction and high thermal conductivity) but are commercially viable for the electric vehicle passenger car market are still actively sought.

### Summary of the Invention

According to the present invention there is provided a base oil comprising a compound of formula (I)

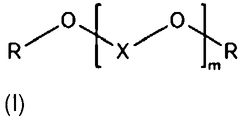

Wherein,
each R is independently selected from a hydrogen, alkyl, or alkyl carbonyl, and where said alkyl groups contain between 1 and 24 carbons,
m is an integer between 1 and 10, and,
X is an alkyl moiety having between 1 and 20 carbon atoms, and where X may be the same or different for repeating units of m.

There is also provided a gear oil formulation comprising said base oil as described herein.

In accordance with an alternative embodiment of the present invention there is provided a method of improving energy efficiency in an electric vehicle, the method comprising using a base oil in accordance with the first aspect of the invention in its powertrain.

In accordance with a further embodiment of the alternative embodiment of the present invention there is provided a method of improving energy efficiency in an electric vehicle, the method comprising using a gear oil formulation in accordance with an aspect of the present invention in its gearbox.

Additionally, there is provided use of a base oil as described herein in a vehicle powertrain.

### Detailed Description of the Invention

It will be understood that any upper or lower quantity or range limit used herein may be independently combined.

It will be understood that, when describing the number of carbon atoms in a substituent group (e.g. 'C1 to C6'), the number refers to the total number of carbon atoms present in the substituent group, including any present in any branched groups. Additionally, when describing the number of carbon atoms in, for example fatty acids, this refers to the total number of carbon atoms including the one at the carboxylic acid, and any present in any branch groups.

The term 'functionality' as used herein with regard to a molecule or moiety of a molecule refers to the number of functional groups in that molecule or moiety of a molecule. A 'functional group' refers to a group in a molecule which may take part in a chemical reaction. For example, a carboxylic acid group, a hydroxyl group and an amine group are all examples of functional groups. For example, a diacid (with two carboxylic acid groups) and a diol (with two hydroxyl groups) both have a functionality of 2 and a triacid and triol both have a functionality of 3.

As such, in accordance with one embodiment of the present invention there is provided a base oil comprising a compound of formula (I)

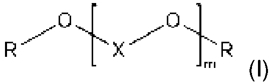

Wherein,
each R is independently selected from a hydrogen, alkyl, or alkyl carbonyl, and where said alkyl groups contain between 1 and 24 carbons,
m is an integer between 1 and 10, and,
X is an alkyl moiety having between 1 and 20 carbon atoms, and where X may be the same or different for repeating units of m.

Base oils comprising a compound of formula (I) provide fluids displaying low traction co-efficient suitable for use in gear oil formulations and provides improved coefficient of traction properties when in use. Base oils comprising a compound of formula (I) provide suitable thermal conductivity and viscosity properties to render them suitable for use in an electric vehicle powertrain. More especially, the thermal conductivity properties of the present base oil are better suited to use in electric vehicles than known base oils belonging to groups I, II, III and IV, and also known esters. Additionally, some embodiments of the present invention also exhibit improved oxidative stability.

The base oil may comprise random or block copolymers. Suitably, the base oil may consist solely of a compound of formula (I).

In the compound of formula (I) m is an integer between 1 and 10, and preferably m is an integer between 1 and 8, more preferably an integer between 1 and 6, and most preferably an integer between 1 and 4.

Polarity within the compound of formula (I) is affected by the repeat number of units m, and the number of carbons present in the alkyl moiety of X, as further described below. Too much polarity within the compound of formula (I) results in the base oil of the present invention having a poor compatibility with other base oils and elastomer materials (for example seals) and may also have a detrimental effect on oxidative stability of the base oil.

In the compound of formula (I) X is an alkyl moiety which may be the same or different for repeating units of m, such that X may independently be 1 or more alkyl moieties where m is an integer of 2 or more. In either case, where X is the same or different for each repeat unit of m, X is an alkyl moiety having between 1 and 20 carbon atoms. Suitably, the alkyl moiety may be branched or linear, and linear is preferred. Preferably X is an alkyl moiety containing between 2 and 6 carbons, and most preferably between 2 and 4 carbons. In some particularly preferred embodiments X is an alkyl moiety having 3 or 4 carbons. As such, when m is 1, the compound of formula (I) comprises an alkyl diol unit having a central alkyl group, and this central alkyl group preferably contains between 2 and 4 carbons. However, more preferably the compound of formula (I) comprises a poly (alkoxy ether) consisting of repeat alkoxy units, and in this embodiment in formula (I) m is an integer of between 2 and 10 and represents the number of repeat alkoxy units present in the compound. As such, preferably the base oil of the present invention comprises a compound of formula (I) comprising a poly (alkoxy ether) consisting of repeating alkoxy units having an alkyl group containing between 1 and 6 carbons, preferably between 1 and 4 carbons; such alkyl groups provide for an average molecular weight (g/mol) of the poly (alkoxy ether) unit of less than 2000 (g/mol), preferably less than 1000 (g/mol), more preferably less than 650 (g/mol). Suitable repeating alkoxy units include ethylene oxide, propylene oxide, trimethylene oxide, butylene oxide, tetramethylene oxide and pentylene oxide. In some embodiments alkoxy groups having branched alkyl chains such as, for example, 1,2-propylene oxide, or 1,3-butanediol may be preferred: the branched nature of the repeat alkoxy units in this embodiment offers a less optimal traction and thermal conductivity (although still acceptable for its intended use in electric vehicles) but may have benefits in terms of the base oil pour point.

As mentioned above, preferably, the compound of formula (I) comprises a poly alkoxy ether consisting of repeat alkoxy units. It should be understood that such polyethers can be derived by different means, including ring opening polymerisation (ROP) of epoxides or cyclic eithers such as ethylene oxide, propylene oxide, oxetane, tetrahydrofuran, and dioxanes, the condensation of glycols or poly glycols, such as 1,3-propanediol, by means including acid-catalysed dehydration, or Williamson etherification of glycols or poly glycols and alkyl halides. As such, the poly alkoxy ether may preferably be derived from epoxy alkanes such as ethylene oxide, oxetane, or tetrahydrofuran, or derived from glycols such as 1,3-propanediol and in this case, and most preferably, the compound of formula (I) will comprise poly alkoxy ethers having linear alkyl segments. More especially, polyethylene glycol (PEG) (polyethylene oxide), polytrimethylene ether glycol (PTriMEG) (polytrimethylene oxide) and polytetramethylene ether glycol (PTMEG) (polytetramethylene oxide) have surprisingly been found to provide high thermal conductivity values relative to their viscosity, and as such are particularly preferred in the present invention as they provide base oils particularly suited to use in electric vehicles.

As such, the polyalkylene oxide may preferably be derived from ethylene oxide, 1,3-propandiol, 1,3-propylene oxide (oxetane), or 1,4-butylene oxide (tetrahydrofuran), and in this case, and most preferably, the compound of formula (I) will comprise polyethylene glycol (PEG) (polyethylene oxide), polytrimethylene ether glycol (PTriMEG) (polytrimethylene oxide), or polytetramethylene ether glycol (PTMEG) (polytetramethylene oxide), which have surprisingly been found to provide high thermal conductivity values relative to their viscosity. The incorporation of branched alky oxy groups, such as those derived from 1,2-propylene oxide is also possible: the branched nature of the of repeat alkoxy units derived from the cyclic ether in this instance offer a base oil with a less optimal thermal conductivity (although still acceptable for its intended use) but may have benefits in terms of the base oil pour point.

Desirably the compound of formula (I) comprises a poly (alkoxy ether) consisting of repeat alkylene oxy units derived from a renewable, bio-based source. More especially, the poly (alkoxy ether) may be derived from bio-ethylene oxide, bio-tetrahydrofuran, and/or bio-sourced glycols including ethylene glycol, 1,3-propane diol, and 1,4-butane diol, which may be produced from bioethanol derived from natural feedstocks.

As shown above, the compound of formula (I) contains two R groups, which are independently selected from a hydrogen, alkyl, or alkyl carbonyl, and where said alkyl contain between 1 and 24 carbons, more preferably between 5 and 18 carbons, and most preferably between 6 and 12 carbons. Accordingly, the two R groups may be the same or different, varying R in the compound will allow for enhanced tailoring of the compound (and hence base oil) physical properties. Preferably at least one of the R groups is selected from an alkyl or alkyl carbonyl, and more preferably both R groups are selected from an alkyl or alkyl carbonyl, that is to say R is preferably not hydrogen.

It should be understood by the skilled person that where the compound of formula (I) is terminated by either an alkyl carbonyl (to yield an ester) or alkyl (to yield an ether) these groups may be added either during or as a part of the polyether synthesis reaction stage or they may be added later in a subsequent reaction step.

Suitably, R may be derived from an acid or alcohol or other suitable acylating or alkylating reactant which is able to from linkages as depicted in formula (I) with the alkoxy or poly alkoxy ether group as described above to provide the desired R group. More especially, R may preferably be derived from an acid or other reagent which can be bonded with the alkoxy or poly alkoxy ether group as described above to provide the desired ester bonded terminal R group, in this case most preferably R is derived from a carboxylic acid and suitable carboxylic acids include keto acids, aliphatic carboxylic acid, alpha hydroxy acids, dicarboxylic acids including adipates and the like. Alternatively, and additionally, R may be derived from an alcohol or other reagent which can be bonded with the alkoxy or poly alkoxy ether group as described above to provide the desired ether bonded terminal R group. Desirably, R may be derived from an acid or alcohol. More especially, R may be preferably derived from an alcohol, and suitable alcohols include aliphatic alcohols, keto alcohols, aromatic alcohols, polyol alcohols, and the like.

Preferably R is derived from an aliphatic carboxylic acid or alcohol. The aliphatic carboxylic acid or alcohol may be saturated or unsaturated, linear, or branched.

Preferably the aliphatic carboxylic acid or alcohol is saturated, as this provides improved oxidative stability.

Preferably the aliphatic carboxylic acid or alcohol is linear. Linear molecules provide improved traction and thermal conductivity relative to equivalent branched molecules, however, branching may improve pour point properties, as such although linear molecules are preferred in some circumstances (e.g. for use in colder environments) it may be beneficial to provide differing R groups, one of which is branched and one of which is linear, or to provide a base oil comprising two or more compounds of formula (I), where at least one compound contains branching in its R group(s).

Desirably the compound of formula (I) comprises an acid or alcohol derived from a renewable, bio-based source, for example the acid may be a carboxylic acids derived from vegetable fats and/or oils. As such, preferably the aliphatic carboxylic acid or alcohol, as described above, may be a fatty acid or fatty alcohol. The fatty acid or fatty alcohol may be saturated or unsaturated. The fatty acid or fatty alcohol may be linear or branched. Preferably the fatty acid or fatty alcohol is saturated and linear. Naturally, fatty acids and fatty alcohols with even numbers of carbon in their fatty chain are more abundant in nature, and so are more readily and cheaply available, as such these forms of fatty acid or fatty alcohol may be preferred, and particularly those with C6, C8, C10 and C12 chain lengths. The fatty acid or fatty alcohol may be understood to contain a medium fatty acid chain, which provides a C5 to C18 alkyl moiety to the R group of formula (I). More preferably the fatty chain contains 5 to 12 carbons, and most preferably the fatty chain contains 6 to 10 carbons. A suitable fatty acid may be selected from one or more of the following: valeric acid, levulinic acid, caproic acid, enanthic acid, benzoic acid, cyclohexane carboxylic acid, caprylic acid, 2-ethylhexanoic acid, pelargonic acid, capric acid, undecylic acid, lauric acid, tridecylic acid, myristic acid, pentadeceylic acid, palmitic acid, margaric acid, stearic acid, isostearic acid and oleic acid. A suitable fatty alcohol may be selected from one or more of the following: methanol, ethanol, isopropanol, tert-butanol, higher linear and branched primary secondary and tertiary alcohols including Guerbet alcohols such as 2-ethyl hexanol, Oxo alcohols, terpene alcohols and biobased alcohols for example those derived via the reduction of natural fatty acids.

Preferably, the base oil has an average molecular weight (g/mol) of between 200 and 1500, more preferably 250 and 1000, and most preferably 300 and 700.

Suitably, the base oil has a pour point of between about -10 °C and about -90 °C. Preferably the base oil has a pour point of less than -15 °C

Suitably, the base oil has a kinematic viscosity at 40°C of between 6 mm²/s and 1500 mm²/s, preferably 7 mm²/s and 900 mm²/s, more preferably 8 mm²/s and 300 mm²/s, and most preferably 9 mm²/s and 150 mm²/s, as measured using an Anton Paar SVM Viscometer.

Suitably, the base oil has a kinematic viscosity at 100°C of between 2 mm²/s and 100 mm²/s, preferably 2 mm²/s and 50 mm²/s, more preferably 2 mm²/s and 20 mm²/s, and most preferably 2 mm²/s and 5 mm²/s, as measured using an Anton Paar SVM Viscometer.

Suitably, the base oil has a co-efficient of friction of less than 0.016, preferably less than 0.013, more preferably less than 0.0100, and most preferably less than 0.0090, as measured using a mini traction machine (MTM) at 75 °C, at a load of 16 N at 30% slide to roll ratio (SRR).

Suitably, the base oil has a thermal conductivity of higher than 0.131 W/mK at 40 °C, preferably 0.135 W/mK at 40 °C, more preferably 0.141 W/mK at 40 °C, and most preferably 0.151 W/mK at 40 °C.

The present invention also provides a gear oil formulation comprising said base oil as described above. The gear oil can be considered to be a lubricant fluid and may have utility in other areas as a lubricant even where thermal conductivity and traction are not of importance. The gear oil formulation may be suitable for use as an industrial, automotive and/or marine gear oil for use in any type of transmission system. However, the gear oil formulation suitably provides a gearbox oil, and more especially an integrated gearbox oil suitable for use in an electric vehicle; this is because the base oil as described above provides advantageous thermal conductivity properties and desirable traction properties when in use. Additionally, provision of good thermal properties in gear oil may enhance the longevity of the engine life.

Accordingly, gear oil formulations according to the present invention include those suitable for use in an electric vehicle power train. More especially, the gear oil formulation is suitable for use in gear systems with are both integrated and not integrated into the electric motor. Such systems include axels, differentials, and transmissions.

The gear oil formulation can, in some less preferred embodiments, consist solely of the base oil as described above. Alternatively, and preferably, the gear oil formulation may comprise at least 1 wt.%, preferably at least 2 wt.%, more preferably at least 4 wt.%, even more preferably at least 5 wt.% of base oil based on the total weight of the formulation. The gear oil formulation may comprise up to 50 wt.%, preferably up to 35 wt.%, more preferably up to 20 wt.% base oil based on the total weight of the formulation. As such, the base oil as described above is advantageously blended or mixed with a further base oil to provide the gear oil formulation; this allows the base oil of the present invention to be incorporated into a further base oil with may be cheaper or provide some alternative advantageous physical property to the gear oil, for use in the desired transmission system.

In one embodiment, the gear oil formulation is non-aqueous. However, it will be appreciated that components of the gear oil formulation may contain small amounts of residual water (moisture) which may therefore be present in the gear oil formulation. The gear oil formulation may comprise less than 5% water by weight based on the total weight of the formulation. More preferably, the gear oil formulation is substantially water free, i.e. contains less than 2%, less than 1%, or preferably less than 0.5% water by weight based on the total weight of the formulation. Preferably the gear oil formulation is substantially anhydrous.

To adapt the gear oil formulation to its intended use, the gear oil formulation may comprise one or more of the following additive types.
1. Dispersants: for example, alkenyl succinimides, alkenyl succinate esters, alkenyl succinimides modified with other organic compounds, alkenyl succinimides modified by post- treatment with ethylene carbonate or boric acid, pentaerythritols, phenate-salicylates and their post-treated analogues, alkali metal or mixed alkali metal, alkaline earth metal borates, dispersions of hydrated alkali metal borates, dispersions of alkaline-earth metal borates, polyamide ashless dispersants and the like or mixtures of such dispersants.
2. Antioxidants: Antioxidants reduce the tendency of mineral oils to deteriorate in service which deterioration is evidenced by the products of oxidation such as sludge and varnish-like deposits on the metal surfaces and by an increase in viscosity. Examples of antioxidants include phenol type (phenolic) oxidation inhibitors, such as 4,4'-methylene-bis(2,6-di-tert-butylphenol), 4,4'-bis(2,6-di-tert-butylphenol), 4,4'-bis(2-methyl-6-tert-butylphenol), 2,2'-methylene-bis(4-methyl-6-tert-butyl-phenol), 4,4'-butylidene-bis(3-methyl-6-tert- butylphenol), 4,4'-isopropylidene-bis(2,6-di-tert-butylphenol), 2,2'-methylene-bis(4- me- thyl-6-nonylphenol), 2,2'-isobutylidene-bis(4,6-dimethylphenol), 2,2'-methylene- bis(4-methyl-6-cyclohexylphenol), 2,6-di-tert-butyl-4-methylphenol, 2,6-di-tert-butyl-4- ethyl phenol, 2,6-di-tert-butylphenol, 2,4-dimethyl-6-tert-butyl-phenol, 2,6-di-tert-l-dimethyl amino-p-cresol, 2,6-di-tert-4-(N,N'-dimethyl amino- methylphenol), 4,4'- thiobis(2-methyl-6-tert-butylphenol), 2,2'-thiobis(4-methyl-6-tert-butylphenol), bis(3- methyl-4-hydroxy-5-tert-butylbenzyl)-sulfide, and bis(3,5-di-tert-butyl-4- hydroxybenzyl). Other types of oxidation inhibitors include alkylated diphenylamines (e.g., Irganox L-57 ex. BASF, metal dithiocarbamate (e.g., zinc dithiocarbamate), and methylenebis(dibutyldithiocarbamate).
3. Anti-wear agents: As their name implies, these agents reduce wear of moving metallic parts. Examples of such agents include phosphates, phosphites, carbamates, esters, sulfur containing compounds, and molybdenum complexes.
4. Emulsifiers: for example, linear alcohol ethoxylates.
5. Demulsifiers: for example, addition products of alkylphenol and ethylene oxide, polyoxyethylene alkyl ethers, and polyoxyethylene sorbitan esters.
6. Extreme pressure agents (EP agents): for example, zinc dialkyldithiophosphate (primary alkyl, secondary alkyl, and aryl type), sulfurized oils, diphenyl sulfide, methyl trichlorostearate, chlorinated naphthalene, fluoroalkylpolysiloxane, and lead naphthenate. A preferred EP agent is zinc dialkyl dithiophosphate (ZnDTP), e.g. as one of the co-additive components for an anti-wear hydraulic fluid composition.
7. Multifunctional additives: for example, sulfurized oxymolybdenum dithiocarbamate, sulfurized oxymolybdenum organo phosphorodithioate, oxymolybdenum monoglycehde, oxymolybdenum diethylate amide, amine-molybdenum complex compound, and sulfur-containing molybdenum complex compound.
8. Viscosity index improvers: for example, polymethacrylate polymers, ethylenepropylene copolymers, styrene-isoprene copolymers, hydrogenated styrene-isoprene copolymers, polyisobutylene, and dispersant type viscosity index improvers.
9. Pour point depressants: for example, polymethacrylate polymers. Although it is a benefit of the present invention that pour point of the compound of formula (I) is suitable for use as a gearbox oil, embodiments utilising the relatively longer chain linear molecules may benefit from the addition of pour point depressant. Additionally, the presence of some alternative additives may adversely affect the formulation pour point making the addition of a pour point depressant attractive.
10. Foam inhibitors: for example, alkyl methacrylate polymers and dimethyl silicone polymers.
11. Friction modifiers: which may include amides, amines and partial fatty acid esters of polyhydric alcohols and include for example glycerol mono oleate, oleyl amide and alternative friction modifiers available from Croda under the "Perfad" tradename, or available from Nouryon under the "Ethomeen" tradename.

Suitably, the gear oil formulation may comprise at least 0.5 wt.% of one or more additive types, preferably at least 1 wt.%, more preferably at least 5 wt.% based on the total weight of the formulation. The gear oil formulation may comprise up to 30 wt.% of one or more additive types, preferably up to 20 wt.%, more preferably up to 10 wt.% based on the total weight of the formulation.

Other additives may also be present in the gear oils of known functionality at levels between 0.01 to 30 wt.%, more preferably between 0.01 to 20 wt.% more especially between 0.01 to 10 wt.% based on the total weight of the gear oil. These can include detergents, corrosion inhibitors, rust inhibitors, and mixtures thereof. Corrosion inhibitors include sarcosine derivatives, for example Crodasinic O available from Croda Europe Ltd. Ashless detergents include carboxylic dispersants, amine dispersants, Mannich dispersants and polymeric dispersants. Ash-containing dispersants include neutral and basic alkaline earth metal salts of an acidic organic compound. Additives may have more than one functionality in a single material.

The additive or additives may be available in the form of a commercially available additive pack. Such additive packs vary in composition depending on the required use of the additive pack. A skilled person may select a suitable commercially available additive pack for a gear oil. An example of a particularly suitable additive pack for the gear oil is Evogen 5201 ex. Lubrizol, USA which is designed specifically for use in electric vehicles.

The gear oil preferably comprises at least 0.05 wt.%, more preferably at least 0.5 wt.%, particularly at least 1 wt.%, and especially at least 1.5 wt.% of further additive(s) (additive pack) based upon the total weight of the gear oil. The gear oil preferably comprises up to 15 wt.%, more preferably up to 10 wt.%, particularly up to 4 wt.%, and especially up to 2.5 wt.% of further additive(s) (additive pack) based upon the total weight of the gear oil.

Notwithstanding the examples given above, to render the gear oil suitable for use in an electric vehicle, the selection of any additive(s) should take into account copper compatibility (because of the requirements of the electric motor), as well as provide or exhibit low (but not necessarily zero) electrical conductivity; not all additives commonly utilised for combustion engine automotive engines will be suitable for use in electric ah vehicle power train fluids.

The gear oil may have a kinematic viscosity according to an ISO grade. An ISO grade specifies the mid-point kinematic viscosity of a sample at 40°C in cSt (mm²/s). For example, ISO 100 has a viscosity of 100 ± 10 cSt and ISO 1000 has a viscosity of 1000 ± 100 cSt. The gear oil preferably has a viscosity in the range from ISO 10 to ISO 1500, more preferably ISO 68 to ISO 680.

It is also envisaged that the base oil may find utility as a heat transfer fluid. Such a heat transfer fluid can provide a means of removing heat from a system. Such systems requiring, or benefiting from, use of heat transfer fluid may be mechanical or electrical systems. The present base oils may be well suited to use as heat transfer fluids in electrical systems, and more especially they may be well suited to use as heat transfer fluids in electric vehicles.

In accordance with an alternative embodiment of the present invention there is provided a method of improving energy efficiency in an electric vehicle, the method comprising using a base oil in accordance with the first aspect of the invention in the electric vehicle's powertrain. The base oil may be used in various systems within the power train such as axels, differentials, transmissions, battery pack and power electronics. The base oil possesses suitable properties for use in the electric vehicle power train, including traction, thermal, conductivity and viscosity properties which have been optimised for use in electric vehicles. In a further alternative, there is provided a method of improving heat removal from an electric vehicle power train, the method comprising using a base oil in accordance with the first aspect of the present invention in the electric vehicle's powertrain.

Additionally, or alternatively, there is provided a method of improving energy efficiency in an electric vehicle, the method comprising using a gear oil formulation in accordance with an aspect of the present invention in the electric vehicle's gearbox. More especially, the method of improving energy efficiency of the electric vehicle comprises the step of providing the base oil in the form a gear oil formulation in an integrated gearbox. Accordingly, there is provided use of a base oil, or gear oil formulation, as described herein in a vehicle powertrain, especially use in an electric vehicle powertrain, and more especially use in an electric vehicle integrated gearbox. More especially, the base oil or gear oil may be used in such systems within the power train as axels, differentials, transmissions, battery pack and power electronics.

Gear oil formulations according to the present invention include those suitable for use in an electrical vehicle power train. More especially, the gear oil formulation is suitable for use in gear systems with are both integrated and not integrated into the electric motor. Such systems include axels, differentials, and transmissions. It should be noted that electric vehicles may be provided with 2 or more electric motors.

The present invention will now be described with reference to the following examples and accompanying Figures in which,
Figure 1. shows MTM coefficient of traction data for experimental samples and commercial samples at 40 °C,
Figure 2. shows MTM coefficient of traction data for experimental samples and commercial samples at 60 °C,
Figure 3. shows MTM coefficient of traction data for experimental samples and commercial samples at 75 °C,
Figure 4. shows MTM coefficient of traction data for experimental samples and commercial samples at 100 °C,
Figure 5. shows MTM coefficient of traction data for experimental samples and commercial samples at 120 °C.

### Materials

The following materials are utilised in the present examples:
Valeric acid - a C5:0 acid (ex. Merck Life Science UK Limited)
Capric-caprylic acid blend - a C8/10 acid blend (PALMERA A5608 ex. KLK EMMERICH GmbH)
Isostearic acid (Prisorine^{™} 3501 ex. Croda)
Isovaleric acid (ex. Merck Life Science UK Limited)
2-Ethylhexanoic Acid (2-EHA) (CAS Number: 149-57-5 ex. Acros Organics)
Octanoic acid ALMERA A9808 ex. KLK EMMERICH GmbH)
Poly tetrahydrofuran with a molecular weight of 250 g/mol (PolyTHF 250 ex. BASF)
Polyethylene glycol with a molecular weight of 250 g/mol (PEG 250 Mw)
Poly (ethylene glycol) octyl ether comprising C8 alcohol + 2EO 14% and 6EO 86%
1,3 Propane glycol (ex. DuPont Tate & Lyle Bio Products)
A Group III Base Oil (Yubase 4)
A Group IV Base Oil (PAO 4)
A mono ester based traditional combustion engine base fluid (Priolube^{™} 1976 ex. Croda) A saturated ester based traditional combustion engine base fluid (Priolube 1937 ex. Croda).

### 1. Examples

In the following example base oils were prepared being compounds in accordance with Formula (I), as detailed in Table 1.

**Table 1. Example base oils.**

| Sample Identifier | Compound Chemistry |
|---|---|
| 725/190 | Diester of C5:0 acid and PolyTHF 250 |
| 725/196 | Diester of C8/10 acid and PEG 250Mw |
| 732/160 | Diester of isostearic acid and PolyTHF 250 |
| 851/001 | Diester of 2-EHA:C8/10 acid (50:50 ratio) and PolyTHF 250 |
| 851/003 | Diester of isovalerate and PolyTHF 250 |
| 725/198 | Ester of octanoic acid and Poly (ethylene glycol) octyl ether comprising C8 alcohol + 2EO 14% and 6EO 86% |
| 725/182 | Diester of C8/C10 acid and PolyTHF 250 |
| 725/184 | Diester of 2-EHA and PolyTHF 250 |
| 851-160 | Diester of Isostearic acid, C8/C10 acid and 1,3 propane glycol |

For examples which are diester compounds, these may be prepared by the esterification reaction of the suitable alkyl diol (for example 1,4-dibutanediol, or poly (alkoxy ether) diol such as PolyTHF 250), with the suitable one or more fatty acid (for example valeric acid or capric-caprylic acid blend). Two molar equivalents of the desired fatty acid are mixed with one mole of the alkyl diol, optionally in the presence of a catalyst. The reactant mixture can be headed to encourage the esterification reaction, optionally with reduced pressure and or inter atmosphere. The resulting diester compound product may then be subject, where desirable, to further purification to yield the desired product.

For examples which are mixed ether ester compounds, these may be prepared by the condensation of glycols or poly glycols (for example 1,3-propanediol), by means including acid-catalysed dehydration in the presence of mono alcohols (for example octanol) the ratio of reagents being chosen so as to give the desired average oligomer length (for example poly (ethylene glycol) octyl ether comprising C8 alcohol + 2EO 14% and 6EO 86%). The etherification reaction is stopped once a desired degree of etherification or oligomer length has been achieved. The partial ether capped material, which may optionally contain a mix of mono, diether and non-ether capped species is the isolated and then esterified with the desired carboxylic acid species on the free hydroxyl functionalities. Optionally mono ether capped species may also be produced by the alkoxylation of selected alcohols, which can then subsequently be esterified to give a mixed ether ester capped material.

For examples which are diether capped embodiments, these may be prepared by condensation of glycols or poly glycols, such as 1,3-propanediol, by means including acid-catalysed dehydration in the presence of mono alcohols, such as octanol. Where the etherification reaction is driven as near to completion as possible. The resulting product may then be subject where desirable to further purification to yield the desired product. Optionally the product may contain small amounts of mono ether capped and non-ether capped species, which optionally may be removed, retained, or further reacted; where further reacted, this may include acetylation alkylation with reagents such as acetic anhydride or alkyl halides, in order to yield a product containing minimal free hydroxyl functionality.

### 2. Testing

The following tests were used to evaluate the properties of the example base oils:
2.1 Oxidative stability was measured using an Anton Paar RapidOxy machine. 4 grams of sample is placed in a pressure vessel and charged with oxygen at 700kPa before being heated to 140 °C. The time taken for the pressure to drop by 10% is measured as the Oxidative Induction Time (OIT). This provides a relative measure of the resistance of the samples tested to oxidative decomposition, the longer the OIT the more oxidatively stable the sample is.
2.2 Kinematic viscosity was measured at 100 °C and 40 °C using an Anton Paar SVM Viscometer.
2.3 Thermal conductivity was measured using a Thermtest THW-L2, which is based upon the hot wire transient method. Ten data points were collected at temperatures of 40°C and 80°C to create a reliable average, with 5 minutes between each data point to allow the fluid to settle. The test power was set such that the output power measured was 70-90mW and gave a temperature rise of ~3 °C, the test time was set to 1 second.
2.4 Pour point testing was performed on an ISL Mini Pour Point 5Gs to determine the minimum temperature at which the substance will still flow which is correlated to ASTM D97 and D2500.
2.5 Coefficient of friction was measured using a mini traction machine (MTM), tests were performed on a PCS MTM 1. All pieces required to set up the MTM, and standard test specimens supplied by PCS, were sonicated 3 times in heptane for 15 minutes using Camsonix C940 ultrasonic bath with heptane drained and then refreshed after each sonication. All pieces were dried using nitrogen before assembly in the MTM.

**Table 2. MTM Specimen Parameters.**

| | Ball | Disc |
|---|---|---|
| Diameter | ¾ inches | 46 mm |
| Roughness | < 25 nm | < 50 nm |
| Steel | AISI 52100 | AISI 52100 |

The test profile goes from 0-100% slide to roll ratio (SRR) at 16N, taking 41 data points at a given temperature to create a traction curve. This is repeated at 40°C, 60°C, 75°C, 100°C, 120°C and 150°C to show performance across a wide range of temperatures.

### 3. Results

### 3.1 Oxidative stability.

Oxidative stability test date is provided in Table 3, below, for the example samples and for a comparative Group III base oil. A sample with an OIT of at least 40 minutes is considered oxidatively stable and is an acceptable result for a base oil to be utilised in a gear oil formulation. More especially, samples having an OIT of over 60 minutes have performed well in this test. The sample with the greatest OIT was example sample 732/160 at 74.4 minutes.

**Table 3. Oxidative induction time as measured by Anton Paar RapidOxy.**

| Sample | Oxidation stability mins (@140 °C, 700kPa) |
|---|---|
| Group III (4 cSt) | 84 |
| 725/182 | 61 |
| 725/184 | 51 |
| 725/190 | 39 |
| 725/196 | 40 |
| 732/160 | 74 |
| 851/001 | 45 |
| 851/003 | 51 |
| 725/198 | 28 |
| 851-160 | 143 |

### 3.2 Kinematic viscosity at 100 °C and 40 °C.

Table 4, below, shows the viscosity of the samples was as expected with the viscosity correlating well with the size of the molecule. For the example samples the viscosity change between 40 °C and 100 °C was significantly less than the Group III comparative base oil; this is due to the high viscosity index of the example samples with some materials having a viscosity index exceeding 200. As can be seen from Table 4, most of the example base oils have a comparable viscosity at 100 °C to the Group III comparative material of around 4 cSt allowing for fair comparison of traction data.

**Table 4. Kinematic viscosity data.**

| Sample | Viscosity 100 °C-mm²/s | Viscosity 40 °C-mm²/s | Viscosity Index |
|---|---|---|---|
| Group III (4 cSt) | 4.2 | 19.3 | 122 |
| 725/182 | 4.8 | 18.0 | 207 |
| 725/184 | 4.6 | 19.0 | 163 |
| 725/190 | 4.4 | 15.4 | 219 |
| 725/196 | 3.8 | 13.7 | 183 |
| 732/160 | 10.6 | 57.2 | 179 |
| 851/001 | 4.23 | 16.5 | 173 |
| 851/003 | 3.0 | 10.5 | 157 |
| 725/198 | 3.9 | 13.6 | 205 |
| 851-160 | 5.5 | 23.7 | 178 |

### 3.3 Thermal conductivity at 40°C and 80 °C.

Table 5, below, shows the increase in thermal conductivity of the example materials when compared against commercially available base oils of the type Group III, Group , and current ester technology, Priolube 1937. Priolube 1937 was chosen as the comparative ester in this case as it has a viscosity of 4 cSt. The increase in thermal conductivity is significant for lower operating temperature of gears and sensitive components such as motors, electronics, and batteries.

**Table 5. Thermal conductivity data.**

| | Thermal conductivity | Thermal conductivity |
|---|---|---|
| Sample | 40 °C-W/mK | 80 °C-W/mK |
| Group III (4 cSt) | 0.131 | 0.126 |
| Group IV (4 cSt) | 0.136 | 0.13 |
| Priolube 1937 (4cSt) | 0.139 | 0.131 |
| 725/182 | 0.149 | 0.144 |
| 725/184 | 0.142 | 0.137 |
| 725/190 | 0.148 | 0.137 |
| 725/196 | 0.156 | 0.149 |
| 732/160 | 0.162 | 0.157 |
| 851/001 | 0.144 | 0.138 |
| 851/003 | 0.135 | 0.13 |
| 725/198 | 0.151 | 0.146 |
| 851-160 | 0.147 | 0.141 |

Thermal conductivity of the example samples was consistently high, showing that base oils according to formula (I) provide a means of achieving reliably highly thermally conductive gear oils, suitable for use in electric vehicles. The sample with the highest thermal conductivity of those materials tested is 732/160, however, as indicated above, it has a relatively high viscosity at 57 mm²/s at 40°C. As such, use of this base oil in a gear oil formulation may benefit from inclusion of viscosity modifier. The sample with the largest thermal conductivity for its viscosity at 40°C was 725/196 with a viscosity of 13.65 mm2/s at 40°C.

### 3.4 Pour point.

Sample pour point data is provided in Table 6, below. Example sample 851/003 provided the best pour point of all the materials tested; this is believed to be as a result of branching in the short R group derived from isovaleric acid. The comparative Group III base oil had a pour point of -15 °C, and this is thought to be the highest pour point temperature at which a base oil will be suitable for use in a gear oil formulation. However, example samples with higher pour point values may still be utilised with the addition of a pour point depressant. More especially, a sample with a good thermal conductivity profile, but a less than optimal pour point may still be advantageous for use as a fluid in an eclectic vehicle power train.

**Table 6. Pour point data.**

| Sample | Pour Point °C |
|---|---|
| Group III (4 cSt) | -15 |
| 725/182 | -9 |
| 725/184 | -69 |
| 725/190 | -36 |
| 725/196 | -42 |
| 732/160 | -9 |
| 851/001 | -27 |
| 851/003 | -81 |
| 725/198 | 0 |
| 851-160 | -9 |

### 3.5 Coefficient of friction measured using MTM.

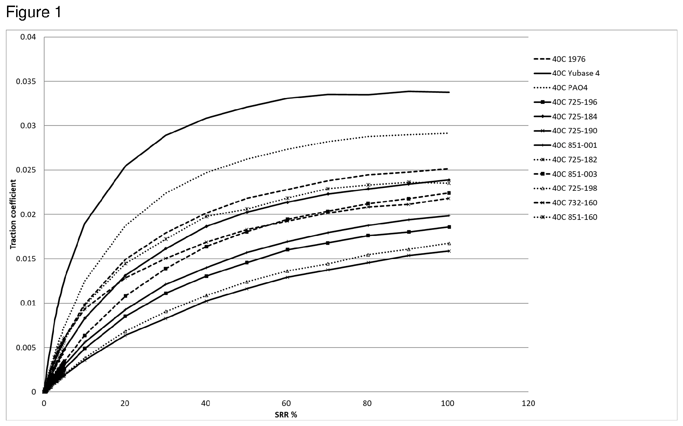

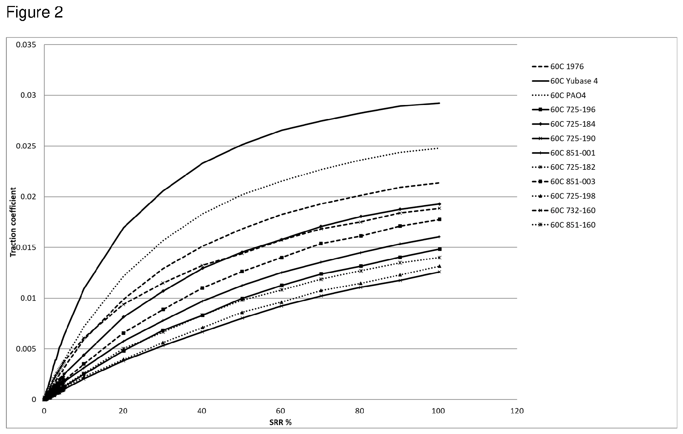

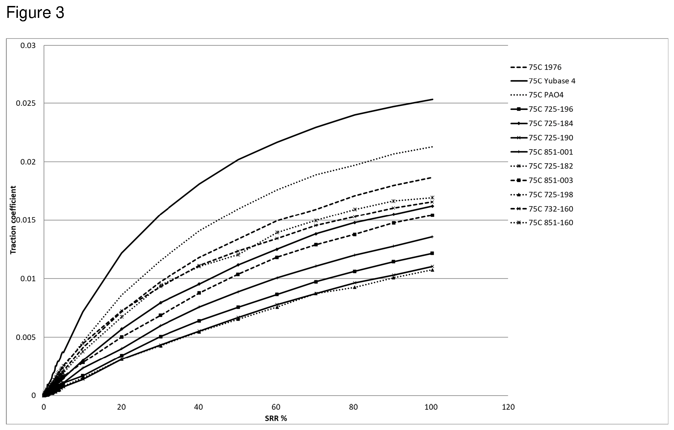

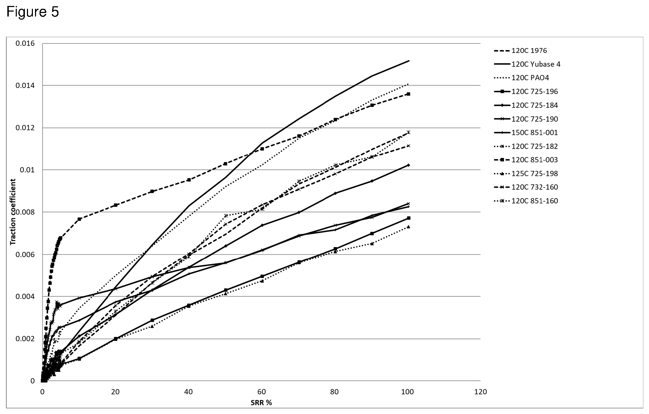

The MTM traction data in Table 7, below, shows a large reduction in the coefficient of friction when compared against a Group III base oil, at a slide to roll ratio of 30%, measure and the data obtained is consistent at a temperature of 40 °C and 75 °C, which are realistic operating temperatures experienced by the fluid when in use in an electric vehicle. Additionally, the friction data is represented in graphically, for temperatures ranging between 40 °C and 120 °C, as shown in Figures 1 to 5; here it can be seen that the sample materials outperform the comparative Group III, Group IV, and traditional ester materials in terms of their low traction properties. All materials tested had a lower level of traction than the reference materials. Of these, the lowest traction materials were example sample 725-198 and example sample 725/196, meaning that both diester and mixed mono ester, mono ether materials are capable of producing very low traction. The traction data at 75 °C is considered to be the best test temperature for traction performance for the preferred gear oil application.

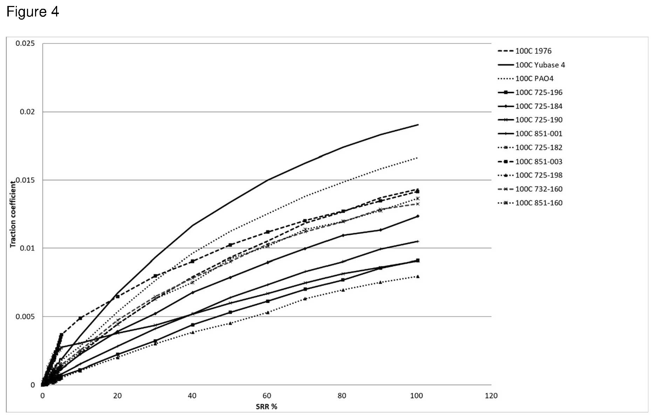

It can be noted that as temperature is increase to 100 °C (as shown in Figure 4) example sample 851-003 begins to lose performance. It is thought that this is due to the low viscosity of this material (3 cSt) which means it is unable to sustain a stable lubricant film at this temperature. At 120 °C, example sample 851-003 starts to perform even worse and at low slide to roll ratios demonstrates a higher traction than the comparative fluids. Above a slide to roll ratio of ~30%, the remaining example samples still provide lower traction than the comparative fluids. 120 °C is considered to be a high temperature for a transmission fluid when in use, and as such, example sample 851-003 is still considered to provide a desirable base oil for application areas that do not operate at such high temperatures.

**Table 7. MTM Traction Data.**

| Sample | Traction data 40 °C 30% SRR | Traction data 75 °C 30% SRR |
|---|---|---|
| Group III (4 cSt) | 0.029000 | 0.016000 |
| 725/182 | 0.010260 | 0.005060 |
| 725/184 | 0.016160 | 0.007960 |
| 725/190 | 0.008266 | 0.004337 |
| 725/196 | 0.011117 | 0.005046 |
| 732/160 | 0.015041 | 0.009320 |
| 851/001 | 0.012120 | 0.006000 |
| 851/003 | 0.013880 | 0.006870 |
| 725/198 | 0.00906 | 0.004270 |
| 851-160 | 0.01722 | 0.00944 |

### 4. Summary of results

Accordingly, it is demonstrated that the base oils as described herein have the ability to improve the efficiency and performance of a vehicle with an electric motor by virtue of being low in traction (providing reduced friction) and therefore reducing power consumption, and having an increased thermal conductivity (relative to currently available commercial fluids) allowing higher motor speeds and the potential for an increase in component lifetime when used as a cooling fluid in an electric vehicle powertrain, or alternatively in battery cooling applications.

A shown in Figures 1, 2 and 3 (which show traction curves at 40 °C, 60 °C and 75 °C respectively) the base oil samples behave as expected with the coefficient of friction increasing with slide to roll ratio; temperatures across this range are considered to be the most important in relation to electric vehicle operation. Across this important temperature range, all of the sample materials show a considerable advantage when compared to the commercially available Group III Base oil, Group IV base oil and even when compared to the commercially available low traction ester, Priolube 1976.

Further, the following embodiments are disclosed:
1. A base oil comprising a compound of formula (I) 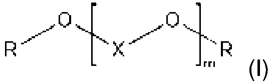 Wherein,
   each R is independently selected from a hydrogen, alkyl, or alkyl carbonyl, and where said alkyl groups contain between 1 and 24 carbons,
   m is an integer between 1 and 10, and,
   X is an alkyl moiety having between 1 and 20 carbon atoms, and where X may be the same or different for repeating units of m.
2. A base oil according to 1, wherein X is an alkyl moiety containing between 2 and 6 carbons.
3. A base oil according to 2, wherein X is an alkyl moiety containing between 2 and 4 carbons.
4. A base oil according to any one of 1 to 3, wherein m is an integer of between 1 and 4 and represents the number of repeat alkoxy units.
5. A base oil according to any one of 1 to 4 comprising a poly alkoxy ether consisting of repeat alkoxy units.
6. A base oil according to 5 comprising polyethylene glycol (PEG) (polyethylene oxide), polytrimethylene ether glycol (PTriMEG) (polytrimethylene oxide) and/or polytetramethylene ether glycol (PTMEG) (polytetramethylene oxide).
7. A base oil according to 5 or 6, comprising a poly (alkoxy ether) consisting of repeat alkylene oxy units derived from a renewable, bio-based source.
8. A base oil according to any one of 1 to 7, wherein R is independently selected from a hydrogen, alkyl, or alkyl carbonyl, and where said alkyl contains between 5 and 18 carbons.
9. A base oil according to 8, wherein R is independently selected from a hydrogen, alkyl, or alkyl carbonyl, and where said alkyl contains between 6 and 12 carbons.
10. A base oil according to any one of 1 to 9, wherein R is not hydrogen.
11. A base oil according to any one of 1 to 10, wherein R is derived from an acid or alcohol.
12. A base oil according to 11, wherein R is derived from an aliphatic carboxylic acid or alcohol which is saturated or unsaturated, linear, or branched.
13. A base oil according to 12, wherein the aliphatic carboxylic acid or alcohol is saturated.
14. A base oil according to 12 13, wherein the aliphatic carboxylic acid or alcohol is linear.
15. A base oil according to any one of 1 to 14, comprising two or more compounds of formula (I), where at least one compound contains branching in its R group(s).
16. A base oil according to any one of 11 to 15, wherein said acid or alcohol is derived from a renewable, bio-based source.
17. A base oil according to 16, wherein said acid or alcohol is a fatty acid or fatty alcohol.
18. A gear oil formulation comprising a base oil in accordance with any one of 1 to 17.
19. A gear oil formulation according to 18 suitable for use in an electric vehicle power train.
20. A gear oil formulation according to 18 or 19, wherein the gear oil formulation comprises at least 1 wt.%, preferably at least 2 wt.%, more preferably at least 4 wt.%, even more preferably at least 5 wt.% of base oil based on the total weight of the formulation.
21. A gear oil formulation according to 18, 19, or 20, wherein the gear oil formulation comprises up to 50 wt.%, preferably up to 35 wt.%, more preferably up to 20 wt.% base oil based on the total weight of the formulation.
22. A gear oil formulation according to any one of 18 to 21, wherein the gear oil formulation comprises less than 5% water by weight based on the total weight of the formulation.
23. A gear oil formulation according to any one of 18 to 22, wherein the gear oil formulation comprises one or more of the following additive types: dispersants, antioxidants, anti-wear agents, emulsifiers, demulsifiers, extreme pressure agents, multifunctional additives, viscosity index improvers, pour point depressants, foam inhibitors and friction modifiers.
24. A gear oil formulation according to 23, wherein the gear oil formulation comprises at least 0.5 wt.% of said one or more additive types, preferably at least 1 wt.%, more preferably at least 5 wt.% based on the total weight of the formulation.
25. A gear oil formulation according to 23 or 24, wherein the gear oil formulation comprises up to 30 wt.% of one or more additive types, preferably up to 20 wt.%, more preferably up to 10 wt.% based on the total weight of the formulation.
26. A gear oil formulation according to any one of 18 to 25, wherein the gear oil formulation comprises other additives at levels between 0.01 wt. % to 30 wt. % based on the total weight of the gear oil.
27. A gear oil formulation according to any one of 18 to 26, wherein the gear oil formulation further comprises an additive pack.
28. A gear oil formulation according to any one of 18 to 27, wherein the gear oil formulation comprises at least 0.05 wt.%, of further additive(s) (additive pack) based upon the total weight of the gear oil, and up to 15 wt.% of further additive(s) (additive pack) based upon the total weight of the gear oil.
29. A gear oil formulation according to any one of 18 to 28, wherein the gear oil has a kinematic viscosity the range from ISO 10 to ISO 1500, more preferably ISO 68 to ISO 680, wherein an ISO grade specifies the mid-point kinematic viscosity of the gear oil formulation sample at 40°C in cSt (mm²/s).
30. A gear oil formulation according to any one of 18 to 29, wherein the gear oil formulation is suitable for use in gear systems with are both integrated and not integrated into the electric motor.
31. A method of improving energy efficiency in an electric vehicle, the method comprising using a base oil in accordance with any one of 1 to 17 in the electric vehicle's powertrain.
32. A method of improving energy efficiency in an electric vehicle, the method comprising using a gear oil formulation in accordance with any one of 18 to 30 in the electric vehicle's gearbox.
33. A method of improving heat removal from an electric vehicle power train, the method comprising using a base oil in accordance with any one of 1 to 17 in the electric vehicle's powertrain.
34. Use of a base oil in accordance with any one of 1 to 17, or a gear oil formulation in accordance with any one of 18 to 31, in an electric vehicle power train.
35. Use in accordance with 34, wherein the vehicle powertrain is an electric vehicle powertrain.
36. Use in accordance with 34 or 35, wherein said use is in a system within the power train, said system selected from one or more of the following: axels, differentials, transmissions, battery pack(s) and power electronics.

## Claims

1. A base oil comprising a compound of formula (I) 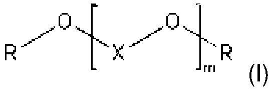 Wherein,
each R is independently selected from a hydrogen, alkyl, or alkyl carbonyl, and where said alkyl groups contain between 1 and 24 carbons,
m is an integer between 1 and 10, and,
X is an alkyl moiety having between 1 and 20 carbon atoms, and where X may be the same or different for repeating units of m.

2. A base oil according to claim 1, wherein X is an alkyl moiety containing between 2 and 6 carbons, optionally wherein X is an alkyl moiety containing between 2 and 4 carbons.

3. A base oil according to claim 1 or 2, wherein m is an integer of between 1 and 4 and represents the number of repeat alkoxy units.

4. A base oil according to any preceding claim, wherein the compound of formula (I) comprises a poly alkoxy ether consisting of repeat alkoxy units, optionally wherein the compound of formula (I) comprises polyethylene glycol (PEG) (polyethylene oxide), polytrimethylene ether glycol (PTriMEG) (polytrimethylene oxide) and/or polytetramethylene ether glycol (PTMEG) (polytetramethylene oxide).

5. A base oil according to any preceding claim, wherein R is independently selected from a hydrogen, alkyl, or alkyl carbonyl, and where said alkyl contains between 5 and 18 carbons, optionally between 6 and 12 carbons.

6. A base oil according to any preceding claim, wherein R is derived from an acid or alcohol, optionally wherein R is derived from an aliphatic carboxylic acid or alcohol which is saturated or unsaturated, and/or linear.

7. A base oil according to claim 6, wherein the aliphatic carboxylic acid or alcohol is saturated, and/or wherein the aliphatic carboxylic acid or alcohol is linear.

8. A gear oil formulation comprising a base oil in accordance with any one of claims 1 to 7.

9. A gear oil formulation according to claim 8, wherein the gear oil formulation comprises at least 1 wt.%, preferably at least 2 wt.%, more preferably at least 4 wt.%, even more preferably at least 5 wt.% of base oil based on the total weight of the formulation, and/or wherein the gear oil formulation comprises up to 50 wt.%, preferably up to 35 wt.%, more preferably up to 20 wt.% base oil based on the total weight of the formulation.

10. A gear oil formulation according to claim 8 or 9, wherein the gear oil formulation comprises less than 5% water by weight based on the total weight of the formulation.

11. A gear oil formulation according to claim 10, wherein the gear oil formulation comprises one or more of the following additive types: dispersants, antioxidants, anti-wear agents, emulsifiers, demulsifiers, extreme pressure agents, multifunctional additives, viscosity index improvers, pour point depressants, foam inhibitors and friction modifiers.

12. A gear oil formulation according to claim 11, wherein the gear oil formulation comprises at least 0.5 wt.% of said one or more additive types, preferably at least 1 wt.%, more preferably at least 5 wt.% based on the total weight of the formulation, optionally wherein the gear oil formulation comprises up to 30 wt.% of one or more additive types, preferably up to 20 wt.%, more preferably up to 10 wt.% based on the total weight of the formulation.

13. A gear oil formulation according to any one of claims 8 to 12, wherein the gear oil has a kinematic viscosity the range from ISO 10 to ISO 1500, more preferably ISO 68 to ISO 680, wherein an ISO grade specifies the mid-point kinematic viscosity of the gear oil formulation sample at 40°C in cSt (mm²/s).

14. Use of a base oil in accordance with any one of claims 1 to 7, or use of a gear oil formulation in accordance with any one of claims 8 to 13, in an electric vehicle power train.

15. Use in accordance with claim 14, wherein the vehicle powertrain is an electric vehicle powertrain, and/or wherein said use is in a system within the power train, said system selected from one or more of the following: axels, differentials, transmissions, battery pack(s) and power electronics.
